# EUROPEAN PATENT APPLICATION

(11) **EP 4 696 454 A1**
(43) Date of publication of application: **18.02.2026**
(21) Application number: 25756808.9
(22) Date of filing: 12.06.2025
(51) Int. Cl.: B23Q 7/00

(54) **DISPLAY CONTROL DEVICE**

(30) Priority: 28.06.2024 JP 2024105160
(71) Applicant: DMG Mori Co., Ltd., Nara-shi, Nara 630-8122 (JP)
(72) Inventor: YODA, Tomoaki, Nara City, Nara 630-8122 (JP); NAKAGAWA, Koji, Nara City, Nara 630-8122 (JP); MORI, Hiroyoshi, Nara City, Nara 630-8122 (JP); SAKAI, Yusuke, Nara City, Nara 630-8122 (JP); MORITA, Hirofumi, Nara City, Nara 630-8122 (JP)
(74) Representative: Isarpatent
(86) International application number: PCT/JP2025/021261
(87) International publication number: WO 2026/004624

(57) **Abstract**

A display controller (650) controls, in a stocker (31) including a shelf plate (510) and a plurality of support portions (560), screen display of a display unit (670) when the shelf plate (510) is rearranged using a robot (21), each support portion (560) being capable of supporting the shelf plate (510). The display controller (650) includes an image display unit (810) that displays an image of the stocker (31) on the display unit (670), and an image update unit (820) that updates, when the shelf plate (510) is rearranged from a first support portion (560A) to a second support portion (560B) among the plurality of support portions (560) by the robot (21), updates a position of the shelf plate (510) in the image of the stocker (31) from the first support portion (560A) to the second support portion (560B) before and after the rearrangement.

## Description

### TECHNICAL FIELD

The present invention relates to a display controller.

### BACKGROUND ART

For example, Japanese Patent Laying-Open No. 2017-102825 (PTL 1) discloses a combined system including a machine tool having a workpiece fixing jig integrally movable with a table, a workpiece stocker that stores a workpiece, and a robot system having a robot that supplies or takes out the workpiece to or from the workpiece fixing jig and the workpiece stocker.

### CITATION LIST

### PATENT LITERATURE

PTL 1: Japanese Patent Laying-Open No. 2017-102825

### SUMMARY OF INVENTION

### TECHNICAL PROBLEM

As disclosed in PTL 1 above, a transport system is known that transports a workpiece using a robot. Such a transport system is required to broaden the scope of automation by increasing the uses of the robot.

An object of the present invention is to provide a display controller that can broaden the scope of automation.

### SOLUTION TO PROBLEM

A display controller according to the present invention controls, in a stocker including a shelf plate and a plurality of support portions, screen display of a display unit when the shelf plate is rearranged using a robot, each support portion being capable of supporting the shelf plate. The display controller includes: an image display unit that displays an image of the stocker on the display unit; and an image update unit that, when the shelf plate is rearranged from a first support portion to a second support portion among the plurality of support portions by the robot, updates a position of the shelf plate in the image of the stocker from the first support portion to the second support portion before and after the rearrangement.

A transport system according to the present invention includes: a robot having a hand; a pallet stocker for storing a pallet for holding a workpiece, the pallet stocker including a shelf plate that allows the pallet to be placed thereon, and a plurality of support portions spaced apart from each other in an upward-downward direction, each support portion being capable of supporting the shelf plate; and a robot control unit that, when accepting a command for rearranging the shelf plate from a first support portion to a second support portion among the plurality of support portions, controls the robot to move the shelf plate from the first support portion to the second support portion while gripping the shelf plate with the hand.

In a method of controlling a transport system according to the present invention, the transport system includes: a robot having a hand; and a pallet stocker for storing a pallet for holding a workpiece, the pallet stocker including a shelf plate that allows the pallet to be placed thereon, and a plurality of support portions spaced apart from each other in an upward-downward direction, each support portion being capable of supporting the shelf plate. The method of controlling a transport system includes the steps of: accepting a command for rearranging the shelf plate from a first support portion to a second support portion among the plurality of support portions; and controlling, in response to the command, the robot to move the shelf plate from the first support portion to the second support portion while gripping the shelf plate with the hand.

A program according to the present invention is a program executed by a computer for controlling a transport system. The transport system includes: a robot having a hand; and a pallet stocker for storing a pallet for holding a workpiece, the pallet stocker including a shelf plate that allows the pallet to be placed thereon, and a plurality of support portions spaced apart from each other in an upward-downward direction, each support portion being capable of supporting the shelf plate. The program causes the computer to perform the steps of: accepting a command for rearranging the shelf plate from a first support portion to a second support portion among the plurality of support portions; and controlling, in response to the command, the robot to move the shelf plate from the first support portion to the second support portion while gripping the shelf plate with the hand.

### ADVANTAGEOUS EFFECTS OF INVENTION

According to the present invention, a display controller can be provided that can broaden the scope of automation.

### BRIEF DESCRIPTION OF DRAWINGS

Fig. 1 is a top view of a transport system in an embodiment of the present invention.
Fig. 2 is a simplified top view of the transport system in Fig. 1.
Fig. 3 is a perspective view showing the relationship of a pallet, a workpiece hand, a shelf, and a teaching hand to a master hand.
Fig. 4 is a perspective view of the master hand.
Fig. 5 is another perspective view of the master hand.
Fig. 6 is a view for illustrating a structure of the master hand.
Fig. 7 is a perspective view of a pallet stocker in Fig. 1.
Fig. 8 is a perspective view of the pallet stocker in the area enclosed by a chain double-dashed line VIII in Fig. 7.
Fig. 9 is a block diagram showing a control system of the transport system in Fig. 1.
Fig. 10 is a top view showing a first step of workpiece machining using a workpiece stocker.
Fig. 11 is a top view showing a second step of workpiece machining using the workpiece stocker.
Fig. 12 is a top view showing a third step of workpiece machining using the workpiece stocker.
Fig. 13 is a top view showing a fourth step of workpiece machining using the workpiece stocker.
Fig. 14 is a top view showing a fifth step of workpiece machining using the workpiece stocker.
Fig. 15 is a top view showing a sixth step of workpiece machining using the workpiece stocker.
Fig. 16 is a top view showing a first step of workpiece machining using a setup station.
Fig. 17 is a top view showing a second step of workpiece machining using the setup station.
Fig. 18 is a top view showing a third step of workpiece machining using the setup station.
Fig. 19 is a top view showing a fourth step of workpiece machining using the setup station.
Fig. 20 is a top view showing a fifth step of workpiece machining using the setup station.
Fig. 21 is a top view showing a first step of loading a pallet to the pallet stocker.
Fig. 22 is a top view showing a second step of loading the pallet to the pallet stocker.
Fig. 23 is a top view showing a third step of loading the pallet to the pallet stocker.
Fig. 24 is a front view of the pallet stocker in Fig. 7.
Fig. 25 is a block diagram showing a control system for rearranging a shelf plate in the pallet stocker.
Fig. 26 is a flowchart showing a flow of rearranging the shelf plate in the pallet stocker.
Fig. 27 shows a rearrangement screen (before update) on a display unit.
Fig. 28 shows the rearrangement screen (after update) on the display unit.

### DESCRIPTION OF EMBODIMENTS

An embodiment of the present invention will be described with reference to the drawings. In the drawings referred to below, the same or corresponding components have the same reference signs allotted.

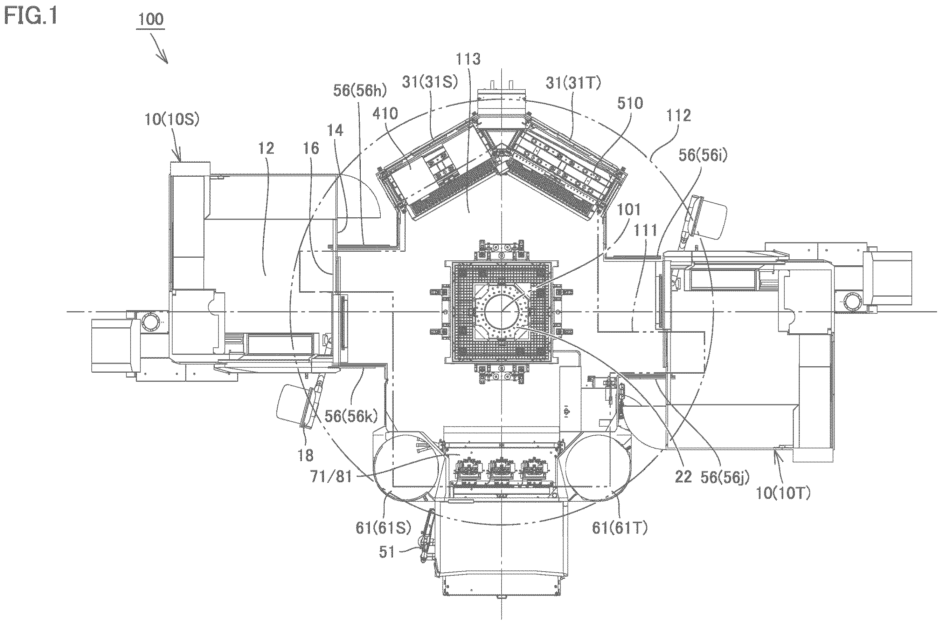

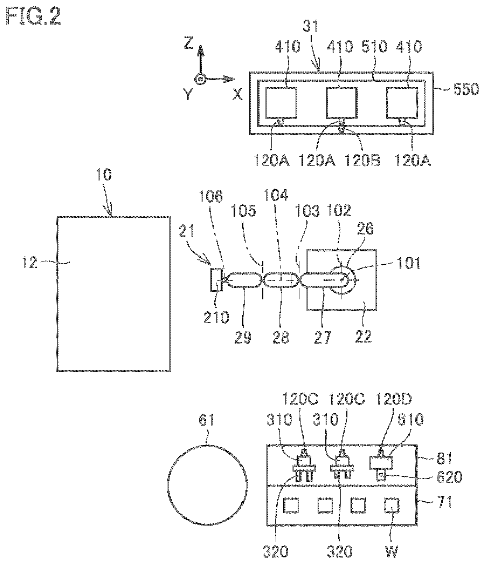

Fig. 1 is a top view of a transport system in an embodiment of the present invention. Fig. 2 is a simplified top view of the transport system in Fig. 1.

Referring to Figs. 1 and 2, a transport system 100 in the present embodiment has a robot 21 and a robot base 22.

In a typical example, robot 21 is a 6-axis articulated robot. Robot 21 has a base 26, a first arm 27, a second arm 28, a hand attachment portion 29, and a master hand 210.

Robot base 22 is a support stand that supports robot 21 and is fixed to the floor of a plant or the like. Robot base 22 is made of metal. Base 26 is connected to robot base 22 to be rotatable about a swivel center axis 101. Swivel center axis 101 is an imaginary straight line corresponding to the swivel center of robot 21 and extends in the upward-downward direction.

First arm 27 is attached to base 26. First arm 27 is pivotable about a pivot center axis 102 disposed at the attachment portion (joint) of first arm 27 to base 26. Second arm 28 is attached to first arm 27. Second arm 28 is pivotable about a pivot center axis 103 disposed at the attachment portion (joint) of second arm 28 to first arm 27, and can rotate hand attachment portion 29 about a rotation center axis 104 along second arm 28. Hand attachment portion 29 is attached to second arm 28. Hand attachment portion 29 is pivotable about a pivot center axis 105 disposed at the attachment portion (joint) of hand attachment portion 29 to second arm 28, and can rotate master hand 210 about a rotation center axis 106 arranged along hand attachment portion 29.

Master hand 210 is attached to hand attachment portion 29 as an end effector. Master hand 210 is attached to second arm 28 to be pivotable about pivot center axis 105. Master hand 210 is attached to second arm 28 via hand attachment portion 29. Second arm 28 is attached to first arm 27 to be pivotable about pivot center axis 103.

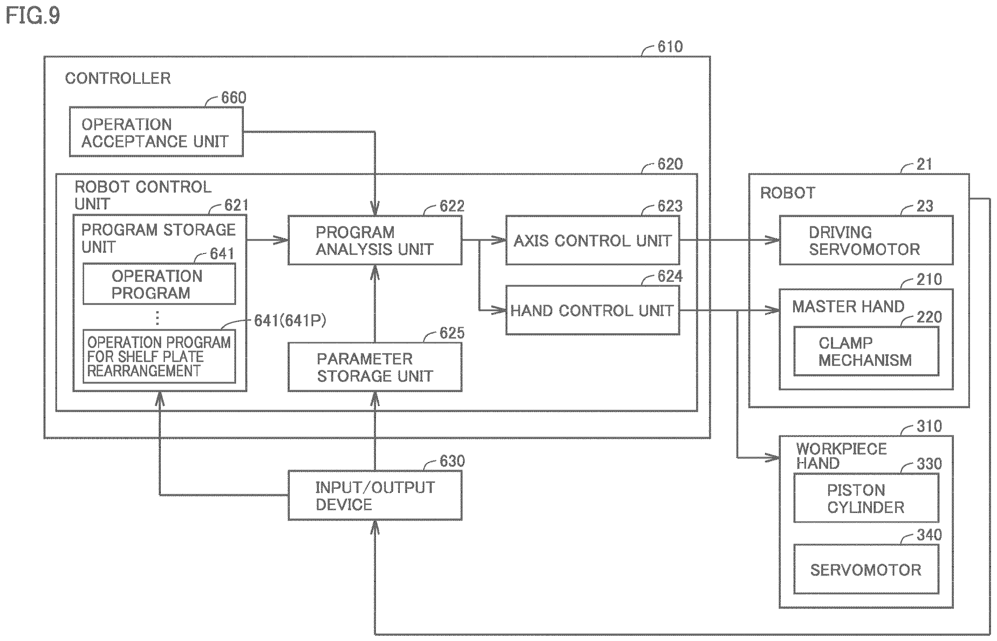

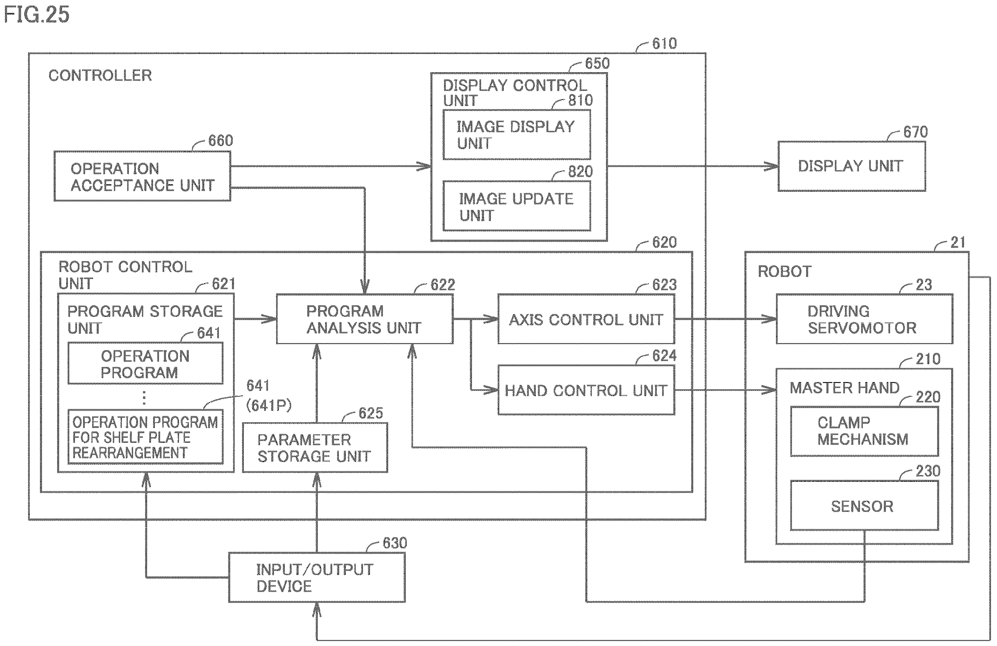

Robot 21 further has a plurality of driving servomotors 23 (see Figs. 9 and 25, which will be referred to later) for causing base 26, first arm 27, second arm 28, hand attachment portion 29, and master hand 210 to operate respectively about the above-described axes (swivel center axis 101, pivot center axis 102, pivot center axis 103, rotation center axis 104, pivot center axis 105 and rotation center axis 106).

In Fig. 1, the area in which master hand 210 moves (the operating area of master hand 210) in transport system 100 is indicated by a chain double-dashed line 111. In addition, the maximum area in which master hand 210 can move is indicated by a chain double-dashed line 112, which extends in an arc shape about swivel center axis 101.

Transport system 100 further has a machine tool 10 (10S, 10T), a pallet stocker 31 (31S, 31T), a workpiece stocker 71, a hand stocker 81, and a setup station 61 (61S, 61T).

Machine tool 10 (10S, 10T), pallet stocker 31 (31S, 31T), workpiece stocker 71, hand stocker 81, and setup station 61 (61S, 61T) are provided around robot base 22. Machine tool 10 (10S, 10T), pallet stocker 31 (31S, 31T), workpiece stocker 71, hand stocker 81, and setup station 61 (61S, 61T) are located side by side along the circumferential direction of swivel center axis 101. In the top view shown in Fig. 1, at least part of a device such as machine tool 10 (10S, 10T), pallet stocker 31 (31S, 31T), workpiece stocker 71, hand stocker 81, and setup station 61 (61S, 61T) overlaps the operating area of master hand 210, which is indicated by chain double-dashed line 111.

The robot in the present invention is not limited to the above-described 6-axis articulated robot, and may be a robot (gantry loader) capable of moving a transfer object in the directions of three axes mutually orthogonal to one another. In addition, the machine tool, pallet stocker, workpiece stocker, hand stocker, and setup station may be disposed side by side linearly.

Machine tool 10 is a machining center that performs workpiece machining by bringing a rotating tool into contact with the workpiece. Machine tool 10 is a numerically controlled (NC) machine tool in which various operations for workpiece machining are automated through numerical control by a computer.

Machine tool 10 may be a multi-tasking machine having a turning function using a fixing tool and a milling function using a rotating tool, or an additive manufacturing (AM)/subtractive manufacturing (SM) hybrid machine capable of additive manufacturing of workpieces and subtractive manufacturing of workpieces. Machine tool 10S and machine tool 10T may be machine tools of the same type or machine tools of different types.

Machine tool 10 has a cover body 14. Cover body 14 forms the external appearance of machine tool 10 and also defines a machining area 12. Machining area 12 is the space in which the workpiece is machined, and is hermitically sealed by cover body 14 so as to prevent foreign matter such as chips or cutting oil associated with workpiece machining from leaking outside the machining area.

Cover body 14 has an opening 16. Robot 21 transports a transport object such as workpiece W or a pallet 410 to machining area 12 through opening 16. Opening 16 has a door or a shutter that is openable and closable.

In machining area 12, a tool spindle for rotating a tool, a table for holding pallet 410, and the like are provided.

Machine tool 10 further has an operation panel 18. Operation panel 18 includes a controller that controls an operation of machine tool 10, a display unit (display) for displaying various information related to machining, and an operation unit that accepts various operations for machine tool 10.

Machine tool 10S and machine tool 10T are positioned so as to face each other with robot base 22 in between. Machine tool 10S and machine tool 10T are provided at angular positions offset by 180° in the circumferential direction about swivel center axis 101.

Pallet stocker 31 is a device for storing pallet 410. Pallet stocker 31 is provided between machine tool 10S and machine tool 10T in the circumferential direction about swivel center axis 101. Pallet stocker 31S and pallet stocker 31T are provided adjacent to each other in the circumferential direction about swivel center axis 101.

Workpiece stocker 71 is a device for storing workpiece W. Workpiece stocker 71 has a shelf structure on which workpiece W can be placed. Hand stocker 81 is a device for storing various types of hands, such as a workpiece hand 310 and a teaching hand 710, which will be described later. Hand stocker 81 has a shelf structure on which various types of hands can be placed.

Workpiece stocker 71 and hand stocker 81 are provided between machine tool 10S and machine tool 10T in the circumferential direction about swivel center axis 101. Workpiece stocker 71 and hand stocker 81 are positioned so as to face pallet stocker 31 (31S, 31T) with robot base 22 in between. Workpiece stocker 71 and hand stocker 81 are provided side by side in the upward-downward direction.

Setup station 61 is a device mainly for attaching and detaching workpiece W to and from pallet 410. Setup station 61 is equipped with a pallet placement base (not shown) on which pallet 410 can be placed. Setup station 61 is provided between machine tool 10 and workpiece stocker 71, hand stocker 81 in the circumferential direction about swivel center axis 101. Setup station 61 is provided adjacent to workpiece stocker 71 and hand stocker 81 in the circumferential direction about swivel center axis 101.

Setup station 61S and setup station 61T are provided on the opposite sides of workpiece stocker 71 and hand stocker 81 in the circumferential direction about swivel center axis 101.

The number of the devices such as machine tools 10, pallet stockers 31, workpiece stockers 71, hand stockers 81, and setup stations 61 included in transport system 100 is not particularly limited.

Transport system 100 further has a plurality of fences 56 (56h, 56i, 56j, 56k). Fences 56 rise from the floor of a plant or the like. In the top view shown in Fig. 1, fence 56h extends between machine tool 10S and pallet stocker 31S. In the top view shown in Fig. 1, fence 56i extends between pallet stocker 31T and machine tool 10T. In the top view shown in Fig. 1, fence 56j extends between machine tool 10T and setup station 61T. In the top view shown in Fig. 1, fence 56k extends between setup station 61S and machine tool 10S.

Robot 21 is disposed in a space 113 surrounded by the plurality of fences 56 (56h, 56i, 56j, 56k), machine tools 10 (10S, 10T), pallet stockers 31 (31S, 31T), workpiece stocker 71, hand stocker 81, and setup stations 61 (61S, 61T). The operating area of master hand 210, indicated by chain double-dashed line 111, is included in space 113.

The operator cannot access pallet stocker 31 from outside of space 113. The operator can load pallet 410 to pallet stocker 31 and retrieve pallet 410 from pallet stocker 31 through setup station 61. The operator can access workpiece stocker 71 and hand stocker 81 from outside of space 113. Through workpiece stocker 71, the operator can load a workpiece W yet to be machined to transport system 100 and retrieve a machined workpiece W' from transport system 100. Through hand stocker 81, the operator can load various types of hands to transport system 100 and retrieve the hands from transport system 100.

Transport system 100 further has a transport operation panel 51. Transport operation panel 51 includes a controller 610 that controls an operation of robot 21, a display unit 670 for displaying various information related to transport by robot 21, and an operation unit that accepts various operations for robot 21 (see Figs. 9 and 25, which will be referred to later). In the present embodiment, display unit 670 is configured as a touch panel display that can be operated by the operator, and is in charge of some of the functions of the operation unit. The operation unit may be configured as various buttons that can be pressed, numeric keys that can receive input of numbers, a dial, or the like.

Transport operation panel 51 is attached to workpiece stocker 71 and hand stocker 81. The position at which transport operation panel 51 is provided is not particularly limited.

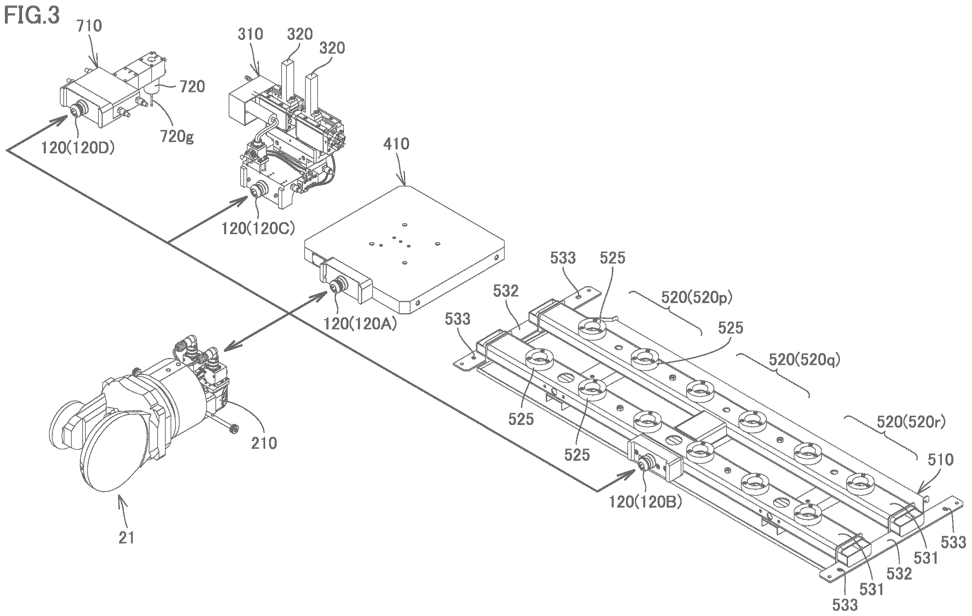

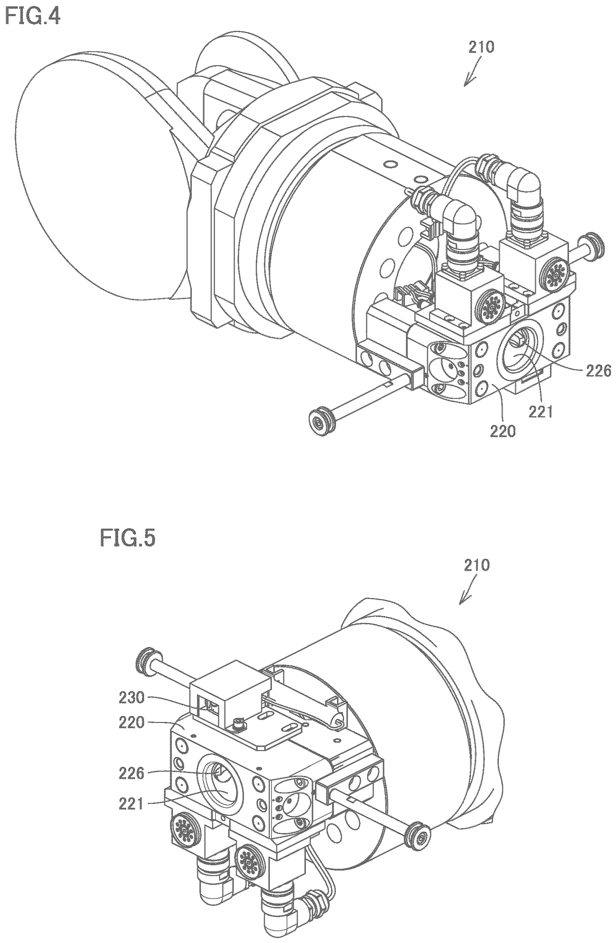

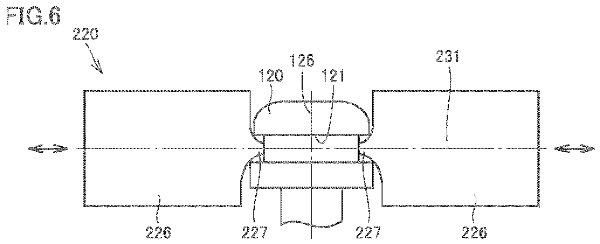

Fig. 3 is a perspective view showing the relationship of the pallet, workpiece hand, shelf plate, and teaching hand to the master hand. Figs. 4 and 5 are perspective views of the master hand. Fig. 6 is a view for illustrating the structure of the master hand.

Referring to Figs. 3 to 6, master hand 210 has a clamp mechanism 220. Clamp mechanism 220 is configured to be operable between a clamped state in which a grip portion 120 is held and an unclamped state in which grip portion 120 is released.

As shown in Figs. 4 to 6, grip portion 120 has a grip shape that is centered on a central axis 126. Grip portion 120 has a groove portion 121. Groove portion 121 has a groove shape that is recessed from the outer circumferential surface of grip portion 120 and goes around central axis 126.

Clamp mechanism 220 has the external appearance of a block body. Clamp mechanism 220 has a grip insertion hole 221. Grip insertion hole 221 is open in one direction.

Clamp mechanism 220 is formed of a cylinder piston. Clamp mechanism 220 has a pair of pistons 226. The pair of pistons 226 extend in a shaft shape along a central axis 231 that is orthogonal to central axis 126 and intersects grip insertion hole 221. The pair of pistons 226 face, while being spaced apart from, each other in the axial direction of central axis 231. The pair of pistons 226 are slidably supported in the axial direction of central axis 126. A protrusion 227, which is engageable with groove portion 121, is provided at the tip of each piston 226.

When grip portion 120 is gripped by master hand 210, master hand 210 is positioned such that clamp mechanism 220 faces grip portion 120. Grip portion 120 is inserted into grip insertion hole 221 by moving master hand 210 linearly toward grip portion 120. Clamp mechanism 220 is operated from the unclamped state to the clamped state by sliding the pair of pistons 226 toward each other by supplying air pressure or the like. As a result, protrusions 227 of the pair of pistons 226 advance into grip insertion hole 221 and engage with groove portion 121.

When master hand 210 releases grip portion 120, clamp mechanism 220 is operated from the clamped state to the unclamped state by sliding the pair of pistons 226 away from each other. This causes protrusions 227 of the pair of pistons 226 to exit from grip insertion hole 221 and come out of groove portion 121. Grip portion 120 is removed from grip insertion hole 221 by linearly moving master hand 210 away from grip portion 120.

As shown in Fig. 5, transport system 100 further has a sensor 230. Sensor 230 can detect the presence or absence of an object, and is, for example, a non-contact photoelectric sensor. Sensor 230 may be a proximity sensor or a contact sensor such as a limit switch.

Sensor 230 is mounted in robot 21. Sensor 230 is mounted in master hand 210. When sensor 230 is a photoelectric sensor, the direction of emission of light from sensor 230 may be parallel to the direction in which grip portion 120 advances into or exits from master hand 210.

Referring to Fig. 3, transport system 100 further has pallet 410 for holding a workpiece. Transport system 100 has a plurality of pallets 410.

Pallet 410 is formed of a metal plate member and has an approximately rectangular shape in top view. The table of machine tool 10 has a built-in clamp mechanism for gripping pallet 410. A jig such as an equerre or a clamping device is attached onto pallet 410, and a workpiece is held by pallet 410 with the jig in between.

Pallet 410 has a first grip portion 120A. First grip portion 120A corresponds to the above-described grip portion 120 and is configured to be gripped by master hand 210. First grip portion 120A is provided on a side surface of pallet 410. First grip portion 120A is detachably provided to pallet 410.

As master hand 210 grips first grip portion 120A, robot 21 can transport pallet 410.

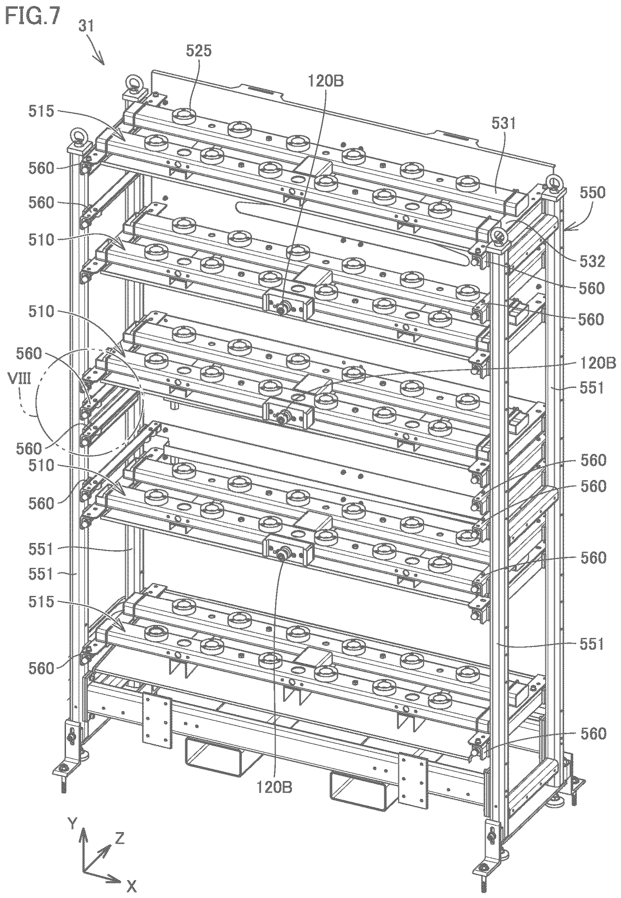

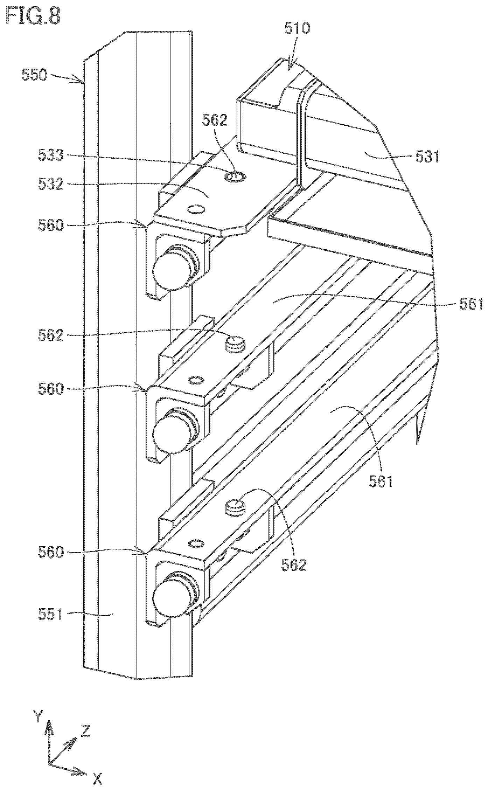

Fig. 7 is a perspective view of a pallet stocker in Fig. 1. Fig. 8 is a perspective view of the pallet stocker within the area enclosed by a chain double-dashed line VIII in Fig. 7.

In Figs. 7 and 8, and in other figures showing pallet stocker 31, the X-axis, Y-axis, and Z-axis, which are coordinate axes of pallet stocker 31, are shown. The X-axis extends in the horizontal direction corresponding to the width direction (left-right direction) of pallet stocker 31, the Y-axis extends in the upward-downward direction, and the Z-axis extends in the horizontal direction corresponding to the depth direction (forward-backward direction) of pallet stocker 31. The X-axis, the Y-axis, and the Z-axis are three axes orthogonal to one another.

Referring to Figs. 3, 7, and 8, pallet stocker 31 has a frame body 550, a plurality of support portions 560, and a plurality of shelf plates 510.

Frame body 550 forms a frame body of rectangular parallelepiped shape. Frame body 550 forms a frame body of rectangular parallelepiped shape with each direction of the X-axis direction and Y-axis direction as the longer direction and the Z-axis direction as the shorter direction. Frame body 550 has four pillars 551. The four pillars 551 are disposed at the four corners of frame body 550 in top view. Each pillar 551 extends in the Y-axis direction (upward-downward direction).

Support portion 560 is configured so as to support shelf plate 510. The plurality of support portions 560 are provided side by side while being spaced apart from each other in the upward-downward direction.

Support portion 560 has a pair of plates 561 on the left and right. The pair of plates 561 are spaced apart from each other in the X-axis direction. Plate 561 extends in the Z-axis direction while having an L-shaped cross-sectional shape when being cut along the X-axis-Y-axis plane. The opposite ends of plate 561 in the Z-axis direction are respectively connected to two pillars 551 provided side by side in the Z-axis direction.

Shelf plate 510 is configured to allow pallet 410 to be placed thereon. Shelf plate 510 has a rectangular shape with the X-axis direction as the longer direction and the Z-axis direction as the shorter direction in top view, and has a plate shape with the Y-axis direction as the thickness direction.

Shelf plate 510 has a pair of vertical frames 532 on the left and right, and a pair of horizontal frames 531 in the front and back. The pair of vertical frames 532 are spaced apart from each other in the X-axis direction. The pair of vertical frames 532 are respectively provided at the opposite ends of shelf plate 510 in the X-axis direction. Vertical frame 532 is formed of a plate member with the Y-axis direction as its thickness direction, and extends in the Z-axis direction. The pair of horizontal frames 531 are spaced apart from each other in the Z-axis direction. Horizontal frame 531 extends in the X-axis direction and is connected to the pair of vertical frames 532 respectively at the opposite ends.

As shown in Figs. 7 and 8, shelf plate 510 is supported by support portion 560. The pair of vertical frames 532 are placed on the pair of plates 561. The pair of vertical frames 532 bear the weight of shelf plate 510.

As shown in Fig. 8, support portion 560 further has a pin 562. Pin 562 is provided on plate 561. Pin 562 protrudes upward from the top surface of plate 561. Vertical frame 532 has a pin hole 533. Pin hole 533 is a through hole that penetrates vertical frame 532 in the Y-axis direction. Pin 562 is disposed in pin hole 533. This configuration prevents shelf plate 510 from being misaligned with support portion 560.

As shown in Fig. 3, shelf plate 510 further has a plurality of pallet support portions 520 (520p, 520q, 520r).

Each pallet support portion 520 is configured to support pallet 410. Each pallet support portion 520 is formed of four tapered cone receiving portions 525 that are spaced apart from each other side by side in the X-axis direction and Z-axis direction. Tapered cone receiving portions 525 are provided on horizontal frame 531. Tapered cone receiving portions 525 protrude upward from the top surface of horizontal frame 531. Tapered cone receiving portion 525 has such a recessed shape as to receive a tapered cone provided on the bottom surface of pallet 410.

Pallet support portion 520p, pallet support portion 520q, and pallet support portion 520r are provided side by side in the stated order in the X-axis direction.

Shelf plates 510 are compatible with placement of pallets 410 of different sizes. For example, shelf plates 510 are compatible with placement of pallets 410 of a size of 400 mm by 400 mm and placement of pallets 410 of a size of 500 mm by 500 mm. When pallets 410 have the size of 400 mm by 400 mm, three pallets 410 can be placed on shelf plate 510 using pallet support portion 520p, pallet support portion 520q, and pallet support portion 520r. When pallets 410 have the size of 500 mm by 500 mm, two pallets 410 can be placed on shelf plate 510 using pallet support portion 520p and pallet support portion 520r.

As shown in Figs. 3 and 7, shelf plate 510 has a second grip portion 120B. Second grip portion 120B corresponds to the above-described grip portion 120 and is configured to be gripped by master hand 210. Second grip portion 120B is provided at the center position of shelf plate 510 in the X-axis direction. Second grip portion 120B protrudes in the Z-axis direction from the front surface of shelf plate 510 (horizontal frame 531). Second grip portion 120B is provided below pallet support portion 520 (tapered cone receiving portion 525). Second grip portion 120B is detachably provided to shelf plate 510.

As master hand 210 grips second grip portion 120B, robot 21 can transport shelf plate 510. Robot 21 rearranges shelf plate 510 between the plurality of support portions 560 in pallet stocker 31. The rearrangement of shelf plate 510 using robot 21 will be described later in detail.

As shown in Fig. 7, pallet stocker 31 further has a fixed shelf plate 515. Fixed shelf plate 515 basically has the same structure as that of shelf plate 510, but differs from shelf plate 510 in that it is not provided with second grip portion 120B. Fixed shelf plate 515 cannot be rearranged between the plurality of support portions 560, and its position in pallet stocker 31 is fixed.

Pallet stocker 31 has two fixed shelf plates 515. The two fixed shelf plates 515 are disposed at the top stage and the bottom stage of pallet stocker 31, respectively. Shelf plate 510 can be rearranged within the area in the upward-downward direction between fixed shelf plate 515 disposed at the top stage and fixed shelf plate 515 disposed at the bottom stage.

Referring to Fig. 3, workpiece hand 310 is configured to grip workpiece W. Workpiece hand 310 has a pair of gripping claws 320. The pair of gripping claws 320 face, while being spaced apart from, each other.

Workpiece hand 310 is configured to be operable between a clamped state in which workpiece W is gripped by the pair of gripping claws 320 and an unclamped state in which the pair of gripping claws 320 release workpiece W. By sliding the pair of gripping claws 320 toward each other, workpiece hand 310 is operated from the unclamped state to the clamped state. By sliding the pair of gripping claws 320 away from each other, workpiece hand 310 is operated from the clamped state to the unclamped state.

Workpiece hand 310 has a piston cylinder 330 and a servomotor 340 as a power source for sliding the pair of gripping claws 320 (see Fig. 9, which will be referred to later).

Workpiece hand 310 further has a third grip portion 120C. Third grip portion 120C corresponds to the above-described grip portion 120 and is configured to be gripped by master hand 210. Third grip portion 120C has a grip shape extending in a direction orthogonal to the sliding direction of the pair of gripping claws 320. Third grip portion 120C is detachably provided to workpiece hand 310.

As master hand 210 grips third grip portion 120C, workpiece hand 310 can be attached to robot 21. Robot 21 can transport workpiece W using workpiece hand 310.

Teaching hand 710 has a touch probe 720. Teaching hand 710 is used for teaching operation of robot 21 using touch probe 720.

Teaching hand 710 further has a fourth grip portion 120D. Fourth grip portion 120D corresponds to the above-described grip portion 120 and is configured to be gripped by master hand 210. Touch probe 720 has a pin-shaped contactor 720g that comes into contact with a measurement object. Fourth grip portion 120D has a grip shape extending in a direction orthogonal to the direction in which contactor 720g extends in a pin shape. Fourth grip portion 120D is detachably provided to teaching hand 710.

As master hand 210 grips fourth grip portion 120D, teaching hand 710 can be attached to robot 21.

First grip portion 120A, second grip portion 120B, third grip portion 120C, and fourth grip portion 120D have the same grip shape. Master hand 210 is configured to selectively grip any one grip portion 120 of first grip portion 120A, second grip portion 120B, third grip portion 120C, and fourth grip portion 120D.

Fig. 9 is a block diagram showing a control system of the transport system in Fig. 1. Referring to Fig. 9, transport system 100 further has a controller 610.

Each component of controller 610 is realized by hardware including a computing unit such as a central processing unit (CPU) and various computer processors, a storage device such as memory or storage, and wired or wireless communication lines that connect these, and software that is stored in the storage device and supplies processing instructions to the computing unit. The computer programs that make up the software may be composed of a device driver, an operating system, various application programs that are located at higher layers than these, or a library that provides common functions to these programs. The computer programs may be recorded in a computer-readable storage medium or in a non-transitory computer-readable storage medium. The computer programs may be included in a computer program product. Each block described below indicates a functional unit block.

Controller 610 has an operation acceptance unit 660 and a robot control unit 620. Operation acceptance unit 660 accepts, for example, an operator's operation through display unit 670 (operation unit) including a touch panel display. Operation acceptance unit 660 outputs a signal corresponding to the operator's operation to robot control unit 620.

Robot control unit 620 controls the operations of robot 21 (including the operation of workpiece hand 310 attached to master hand 210).

Robot control unit 620 has a program storage unit 621, a program analysis unit 622, an axis control unit 623, a hand control unit 624, and a parameter storage unit 625.

Program storage unit 621 stores various operation programs 641 that command the operations of robot 21. Operation programs 641 stored in program storage unit 621 include, for example, an operation command that defines the movement and stop of robot 21, a position command that defines the position and orientation (posture) of master hand 210, a path command that defines the movement path for linear movement, circular movement, or the like, and a speed command that defines the movement speed. Operation program 641 is input via an input/output device 630 connected to robot control unit 620 and is stored in program storage unit 621.

Operation program 641 is written in, for example, a language called standard language for industrial manipulators (SLIM). The specific position and orientation (posture) in each position command included in operation program 641 are obtained by operating robot 21 through a manual operation called teaching operation. As robot 21 is operated by the teaching operation, the rotation angle position of each driving servomotor 23 built in robot 21 is acquired as a parameter, and the acquired parameter is stored in parameter storage unit 625 via input/output device 630.

Program analysis unit 622 reads operation program 641, which is stored in program storage unit 621 and is to be executed, in response to a signal from operation acceptance unit 660. Program analysis unit 622 analyzes operation program 641 to extract a command related to movement, and transmits the command to axis control unit 623. Program analysis unit 622 analyzes operation program 641 to extract a command related to the hand operation, and transmits the command to hand control unit 624.

Axis control unit 623 controls the plurality of driving servomotors 23 in response to the command from program analysis unit 622. Hand control unit 624 controls master hand 210 and/or workpiece hand 310 in response to the command from program analysis unit 622.

Specifically, axis control unit 623 reads a parameter corresponding to each position command from parameter storage unit 625, generates a rotation command (control signal) for each driving servomotor 23 such that the rotational angle position of each driving servomotor 23 becomes the read rotational angle position, that the movement path of master hand 210 becomes the commanded movement path (linear movement or circular movement), and that master hand 210 moves at the commanded speed, and transmits the generated rotation command to each driving servomotor 23. The plurality of driving servomotors 23 move master hand 210 to the commanded position by being supplied with a driving current in response to the rotation command from axis control unit 623.

Hand control unit 624 generates an open/close command for the air valve such that the pair of pistons 226 slide in response to the command from program analysis unit 622, and transmits the open/close command to clamp mechanism 220. Hand control unit 624 generates an open/close command for the air valve such that the pair of gripping claws 320 slide in response to the command from program analysis unit 622, and transmits the open/close command to piston cylinder 330, or generates a rotation command (control signal) for servomotor 340 and transmits the rotation command to servomotor 340.

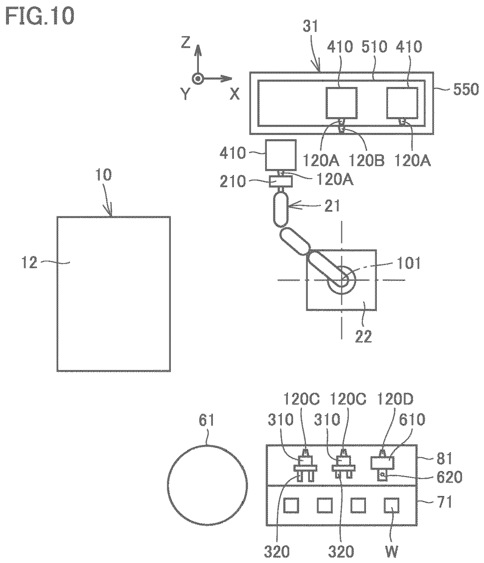

Next, a specific example of the manner of using robot 21 in transport system 100 will be described. Figs. 10 to 15 are top views showing the steps of workpiece machining using a workpiece stocker. Figs. 10 to 15 correspond to Fig. 2.

Referring to Fig. 2, in the initial state, a plurality of pallets 410 are stored in pallet stocker 31. The jig (not shown) such as an equerre or a clamp device is mounted on pallet 410. Workpieces W yet to be machined are stored in workpiece stocker 71. A plurality of workpiece hands 310 and teaching hand 710 are stored in hand stocker 81. Workpiece hand 310 may have a pair of gripping claws 320 having a shape or size different among the plurality of workpiece hands 310.

Referring to Figs. 9 and 10, controller 610 (robot control unit 620) controls robot 21 such that master hand 210 grips first grip portion 120A of pallet 410 stored in pallet stocker 31.

In this step, master hand 210 moves toward pallet stocker 31 and is positioned in the Z-axis direction so as to face first grip portion 120A of pallet 410. First grip portion 120A is inserted into grip insertion hole 221 as master hand 210 moves in the Z-axis direction. Master hand 210 grips first grip portion 120A. Pallet 410 is lifted from shelf plate 510 as master hand 210 moves upward.

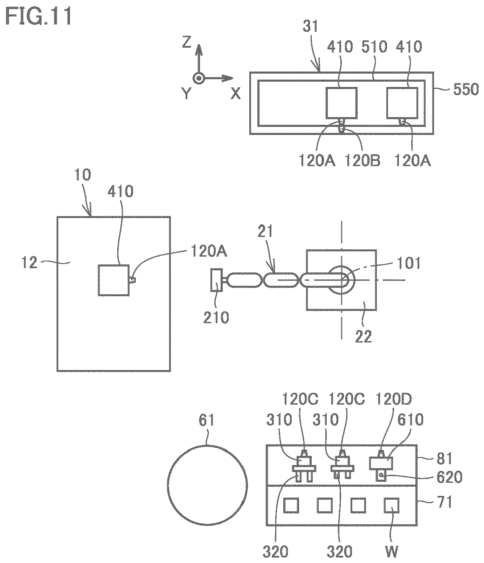

Referring to Figs. 9 and 11, then, controller 610 (robot control unit 620) controls robot 21 such that pallet 410 gripped by master hand 210 moves to machining area 12 of machine tool 10.

In this step, master hand 210 enters machining area 12 and places pallet 410 on a table (not shown). Pallet 410 is held on the table by a clamp mechanism built in the table. Master hand 210 releases first grip portion 120A and exits from machining area 12.

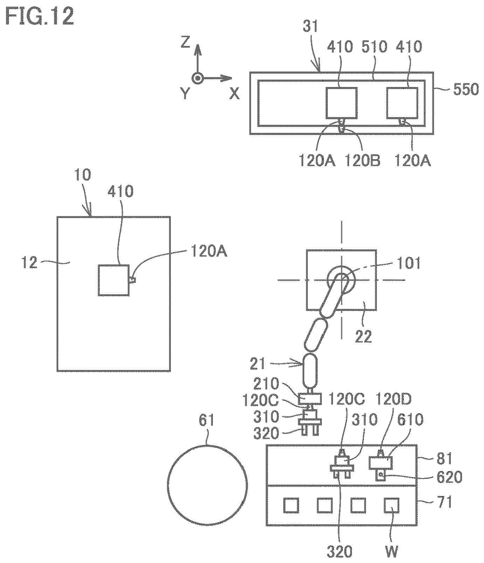

Referring to Figs. 9 and 12, then, controller 610 (robot control unit 620) controls robot 21 such that master hand 210 grips third grip portion 120C of workpiece hand 310 stored in hand stocker 81.

In this step, master hand 210 moves toward hand stocker 81. Workpiece hand 310 is attached to robot 21 as master hand 210 grips third grip portion 120C.

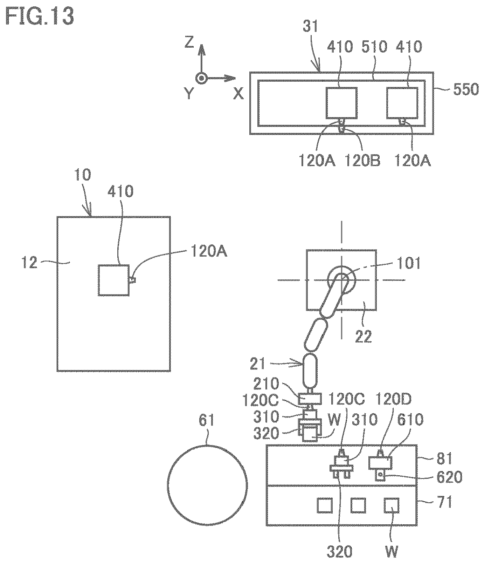

Referring to Figs. 9 and 13, then, controller 610 (robot control unit 620) controls robot 21 and workpiece hand 310 such that workpiece hand 310 grips workpiece W.

In this step, workpiece hand 310 moves toward workpiece stocker 71. Workpiece hand 310 grips workpiece W yet to be machined.

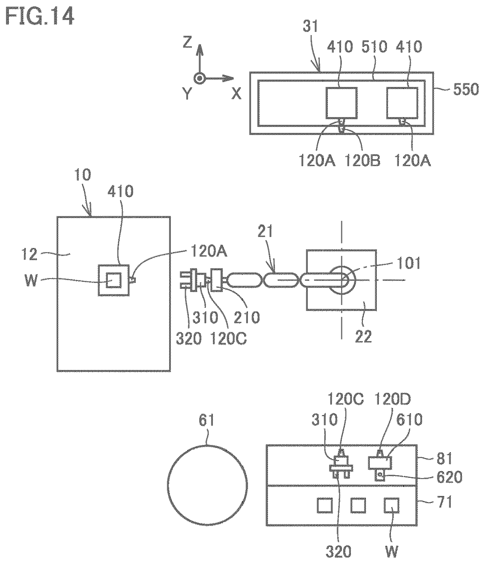

Referring to Figs. 9 and 14, then, controller 610 (robot control unit 620) controls robot 21 and workpiece hand 310 such that workpiece W gripped by workpiece hand 310 is held by pallet 410 disposed in machining area 12 of machine tool 10.

In this step, workpiece hand 310 enters machining area 12 and disposes workpiece W on the jig on pallet 410. The jig holds workpiece W, and workpiece hand 310 releases workpiece W. Workpiece hand 310 exits from machining area 12. Subsequent to this step, machine tool 10 machines workpiece W in machining area 12.

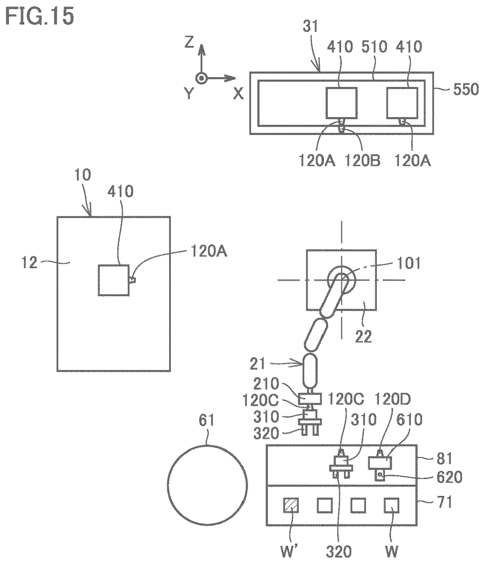

Referring to Figs. 9 and 15, then, controller 610 (robot control unit 620) controls robot 21 and workpiece hand 310 such that a machined workpiece W' is stored in workpiece stocker 71.

In this step, workpiece hand 310 enters machining area 12. Workpiece hand 310 grips machined workpiece W', and the jig on pallet 410 releases workpiece W'. Workpiece hand 310 gripping workpiece W' exits from machining area 12 and moves toward workpiece stocker 71. Workpiece hand 310 disposes workpiece W' in workpiece stocker 71 and releases workpiece W'. The above steps complete the workpiece machining using workpiece stocker 71.

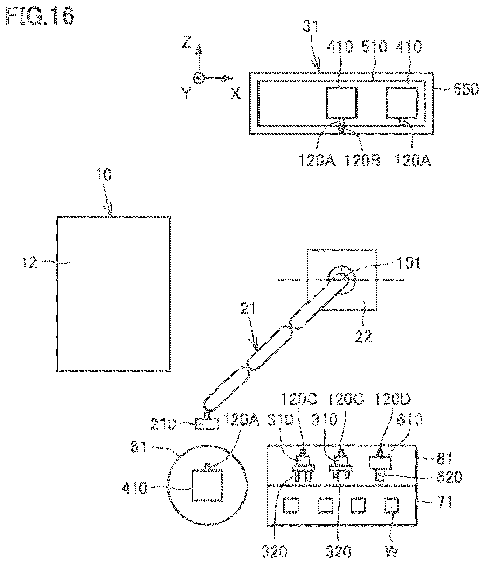

Figs. 16 to 20 are top views showing the steps of workpiece machining using a setup station. Figs. 16 to 20 correspond to Fig. 2.

Referring to Fig. 2, the initial state is similar to that of the workpiece machining using workpiece stocker 71 described above.

Referring to Figs. 9 and 16, controller 610 (robot control unit 620) controls robot 21 such that master hand 210 grips first grip portion 120A of pallet 410 stored in pallet stocker 31. Controller 610 (robot control unit 620) controls robot 21 such that pallet 410 gripped by master hand 210 moves to setup station 61.

In this step, master hand 210 moves toward setup station 61 and places pallet 410 on a pallet placement base (not shown) installed in setup station 61. Master hand 210 releases first grip portion 120A. Master hand 210 exits from setup station 61.

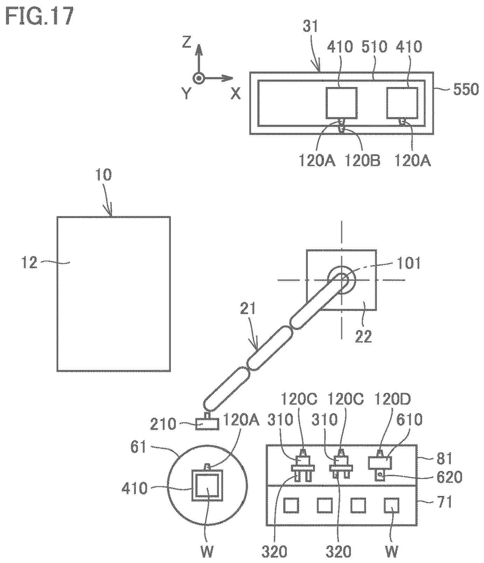

Referring to Figs. 9 and 17, then, the operator sets workpiece W with respect to pallet 410. In this step, workpiece W yet to be machined is held with respect to pallet 410 using the jig on pallet 410.

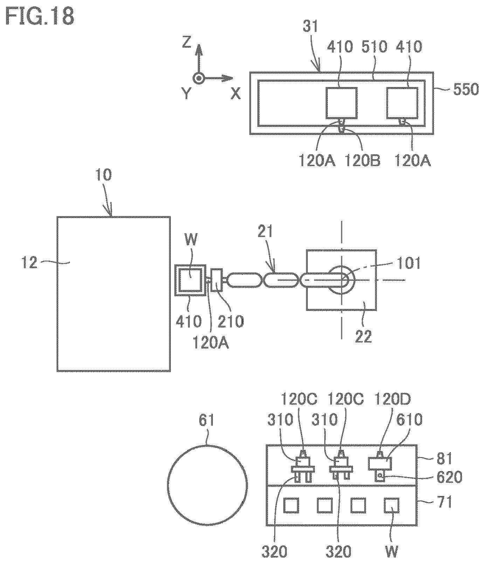

Referring to Figs. 9 and 18, then, controller 610 (robot control unit 620) controls robot 21 such that master hand 210 grips first grip portion 120A of pallet 410 disposed in setup station 61.

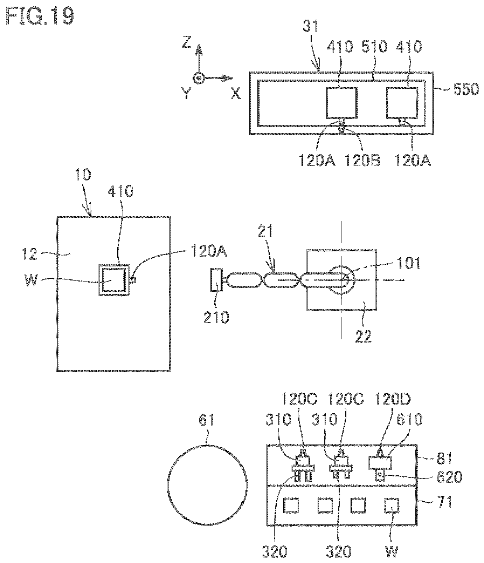

Referring to Figs. 9 and 19, then, controller 610 (robot control unit 620) controls robot 21 such that pallet 410 gripped by master hand 210 moves to machining area 12. Subsequent to this step, machine tool 10 machines workpiece W in machining area 12.

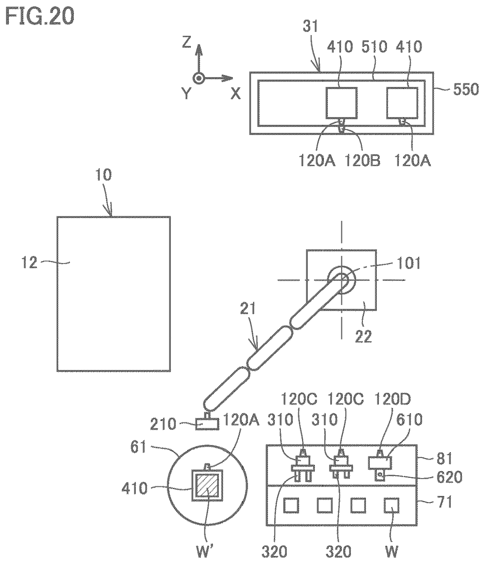

Referring to Figs. 9 and 20, then, controller 610 (robot control unit 620) controls robot 21 such that master hand 210 grips first grip portion 120A of pallet 410 disposed in machining area 12. Controller 610 (robot control unit 620) controls robot 21 such that pallet 410 gripped by master hand 210 moves to setup station 61. Subsequent to this step, the operator removes the machined workpiece W' from the jig on pallet 410. The above steps complete the workpiece machining using setup station 61.

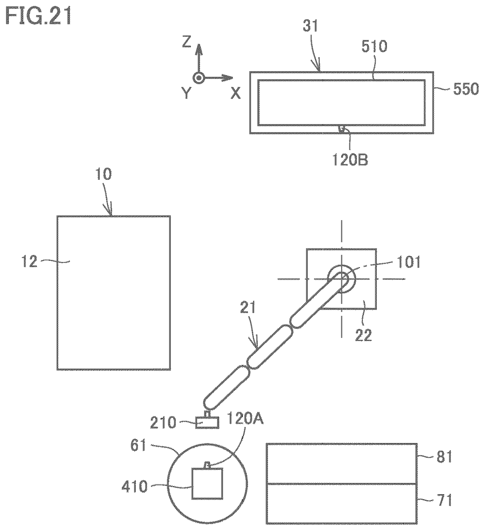

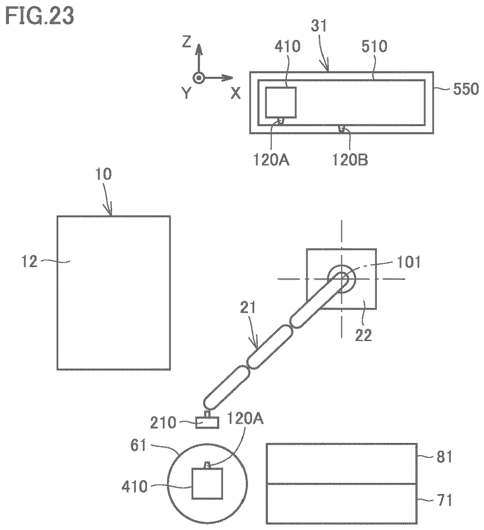

Figs. 21 to 23 are top views showing the steps of loading a pallet to a pallet stocker. Figs. 21 to 23 correspond to Fig. 2.

Referring to Figs. 9 and 21, in the initial state, pallet 410 is not stored in pallet stocker 31. The operator places pallet 410 on the pallet placement base (not shown) in setup station 61.

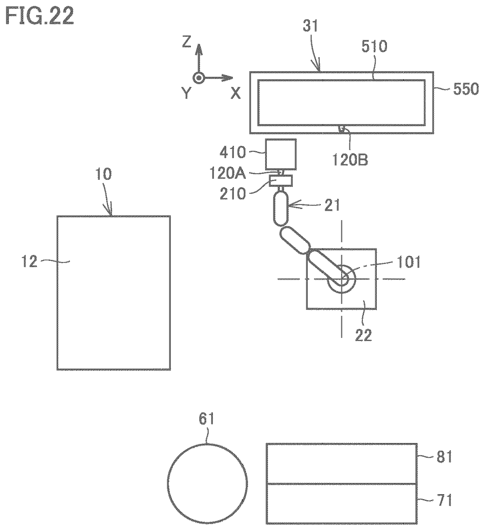

Referring to Figs. 9 and 22, controller 610 (robot control unit 620) controls robot 21 such that master hand 210 grips first grip portion 120A of pallet 410 disposed in setup station 61. Controller 610 (robot control unit 620) controls robot 21 such that pallet 410 gripped by master hand 210 moves to pallet stocker 31.

Referring to Figs. 9 and 22, then, controller 610 (robot control unit 620) controls robot 21 such that pallet 410 gripped by master hand 210 is placed on shelf plate 510.

By repeating the above steps, a plurality of pallets 410 can be loaded to pallet stocker 31.

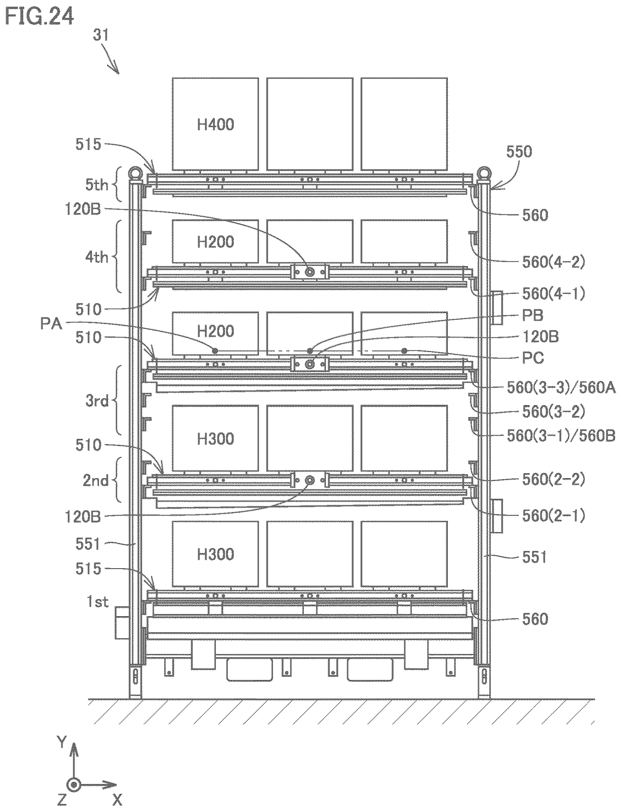

Another example of the manner of using robot 21 in transport system 100 is rearrangement of shelf plate 510 in pallet stocker 31. Rearrangement of shelf plate 510 using robot 21 will be described below in detail. Fig. 24 is a front view of the pallet stocker in Fig. 7.

Referring to Fig. 24, pallet stocker 31 has a multistage shelf structure including a plurality of floors, that is, the "1st", "2nd", "3rd", "4th", and "5th" floors.

On each floor of the lowest floor indicated as "1st" and the highest floor indicated as "5th", fixed shelf plate 515 is disposed.

On the floor second from the bottom, indicated as "2nd", a support portion 560 (2-1) and a support portion 560 (2-2) are spaced apart from each other in the upward-downward direction. Robot 21 can move shelf plate 510 between support portion 560 (2-1) and support portion 560 (2-2).

On the middle floor indicated as "3rd", a support portion 560 (3-1), a support portion 560 (3-2), and a support portion 560 (3-3) are spaced apart from each other in the upward-downward direction. Robot 21 can move shelf plate 510 among support portion 560 (3-1), support portion 560 (3-2), and support portion 560 (3-3).

On the floor second from the top, indicated as "4th", a support portion 560 (4-1) and a support portion 560 (4-2) are spaced apart from each other in the upward-downward direction. Robot 21 can move shelf plate 510 between support portion 560 (4-1) and support portion 560 (4-2).

In an example, the distance between support portion 560 (2-1) and support portion 560 (2-2) in the upward-downward direction is 100 mm, the distance between support portion 560 (3-1), support portion 560 (3-2), and support portion 560 (3-3) in the upward-downward direction is 100 mm, and the distance between support portion 560 (4-1) and support portion 560 (4-2) in the upward-downward direction is 200 mm.

The distance between support portions 560 on each floor may be an equal distance or an unequal distance. The distance between support portions 560 on the first floor may be equal to or different from the distance between support portions 560 on the second floor. The distance between support portions 560 on floors adjacent to each other in the upward-downward direction may be greater than the distance between support portions 560 on each floor.

In the current arrangement of shelf plates 510, shelf plate 510 is supported by support portion 560 (2-1) on the "2nd" floor. On the "3rd" floor, shelf plate 510 is supported by support portion 560 (3-3). On the "4th" floor, shelf plate 510 is supported by support portion 560 (4-1). On fixed shelf plate 515 and shelf plate 510, pallets 410 having the size of 400 mm by 400 mm are placed.

In this arrangement of shelf plates 510, the maximum height of the workpiece that can be placed on each floor is 300 mm on the "1st" floor, 300 mm on the "2nd" floor, 200 mm on the "3rd" floor, 200 mm on the "4th" floor, and 400 mm on the "5th" floor.

For example, assuming that shelf plate 510 is moved from support portion 560 (2-1) to support portion 560 (2-2) on the "2nd" floor, the maximum height of the workpiece that can be placed will be 400 mm on the "1st" floor and 200 mm on the "2nd" floor.

In another example, assuming that shelf plate 510 is moved from support portion 560 (4-1) to support portion 560 (4-2) on the "4th" floor, shelf plate 510 is moved from support portion 560 (3-3) to support portion 560 (3-2) on the "3rd" floor, and shelf plate 510 is removed on the "2nd" floor, the maximum height of the workpiece that can be placed will be 600 mm on the "1st" floor and 600 mm on the "3rd" floor.

By rearranging shelf plate 510 in this way, the maximum height of the workpiece that can be placed on pallet 410 stored in pallet stocker 31 can be freely adjusted.

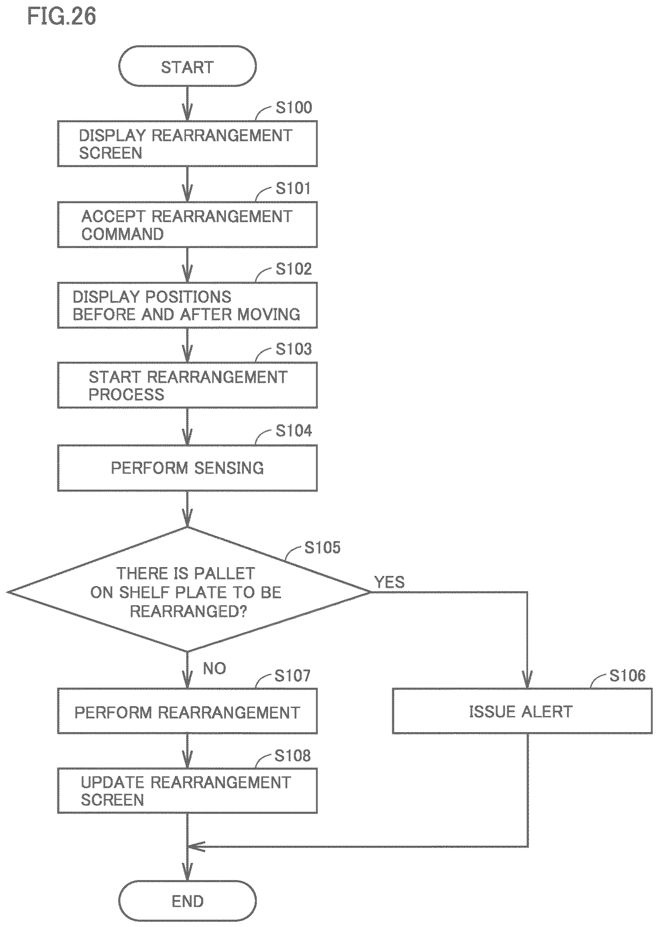

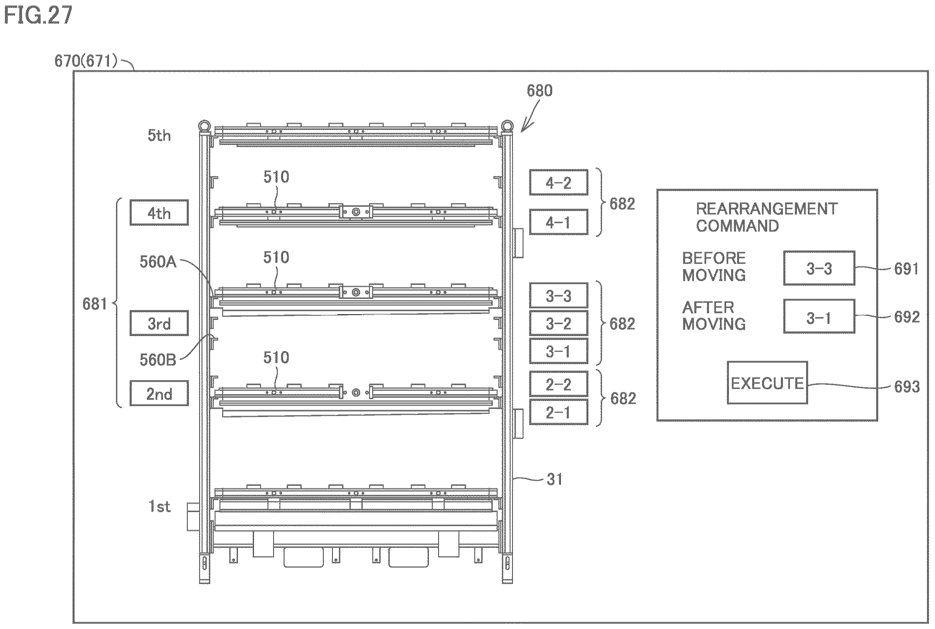

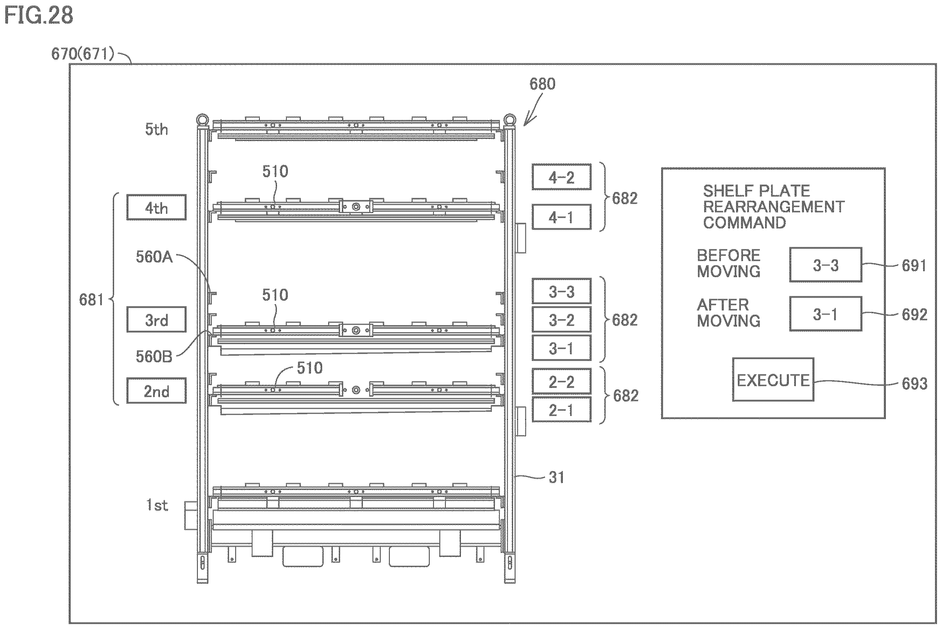

Fig. 25 is a block diagram showing a control system for rearranging a shelf plate in the pallet stocker. Fig. 26 is a flowchart showing a flow of rearranging the shelf plate in the pallet stocker. Figs. 27 and 28 show a rearrangement screen in a display unit.

Referring to Figs. 24 to 28, controller 610 further has a display control unit 650. Display control unit 650 controls the screen display on display unit 670.

The operator performs an operation for starting the mode of rearranging shelf plate 510 via display unit 670 formed of a touch panel display. Operation acceptance unit 660 accepts an operator's operation and outputs a signal corresponding to the operation to display control unit 650. As a result, display control unit 650 causes display unit 670 to display rearrangement screen 671 for shelf plate 510 shown in Fig. 27.

As shown in Fig. 27, rearrangement screen 671 has a pallet stocker image portion 680. Pallet stocker image portion 680 corresponds to an image of pallet stocker 31 as viewed in the Z-axis direction. Pallet stocker image portion 680 may be an image that schematically shows pallet stocker 31. On the initial screen of rearrangement screen 671, the current arrangement of shelf plates 510 (for example, the arrangement of shelf plate 510 supported by each support portion 560 of support portion 560 (2-1), support portion 560 (3-3), and support portion 560 (4-1)) is shown in pallet stocker image portion 680. A first position display unit 691 and a second position display unit 692, which will be described later, are blank.

Rearrangement screen 671 further has a first operation unit 681. First operation unit 681 is configured such that a floor on which shelf plate 510 is to be rearranged is selected by an operator's operation. First operation unit 681 includes a plurality of tabs indicated as "2nd", "3rd", and "4th". The "2nd" tab is shown at a position corresponding to the "2nd" floor in pallet stocker image portion 680, the "3rd" tab is shown at a position corresponding to the "3rd" floor in pallet stocker image portion 680, and the "4th" tab is shown at a position corresponding to the "4th" floor in pallet stocker image portion 680.

Rearrangement screen 671 further has a second operation unit 682. Second operation unit 682 is configured such that support portion 560 of shelf plate 510 to be rearranged, which has been moved, can be selected by the operator's operation.

Second operation unit 682 includes a plurality of tabs respectively indicated as "2-1", "2-2", "3-1 , "3-2", "3-3", "4-1", and "4-2". The plurality of tabs indicated as "2-1", "2-2", "3-1", "3-2", "3-3", "4-1", and "4-2" are indicated, in pallet stocker image portion 680, respectively at the positions corresponding to support portion 560 (2-1), support portion 560 (2-2), support portion 560 (3-1), support portion 560 (3-2), support portion 560 (3-3), support portion 560 (4-1), and support portion 560 (4-2).

Rearrangement screen 671 further has first position display unit 691 and second position display unit 692.

First position display unit 691 displays the position of shelf plate 510, which is to be rearranged, before moving. Second position display unit 692 displays the position of shelf plate 510, which is to be rearranged, after moving.

In conjunction with the operation of first operation unit 681 by the operator, display control unit 650 identifies a floor to be rearranged. Display control unit 650 causes first position display unit 691 to display the current position of shelf plate 510 on the identified floor. In Fig. 27, for example, it is assumed that the operator has operated the "3rd" tab in first operation unit 681. Display control unit 650 causes first position display unit 691 to display "3-3" as the current position of shelf plate 510 on the "3rd" floor.

In conjunction with the operation of second operation unit 682 by the operator, display control unit 650 identifies the position of shelf plate 510 after moving. Display control unit 650 causes second position display unit 692 to display the identified position of shelf plate 510 after moving. In Fig. 27, as an example, it is assumed that the operator has operated the "3-1" tab on second operation unit 682. Display control unit 650 causes second position display unit 692 to display "3-1" as the position of shelf plate 510 after moving.

Rearrangement screen 671 further has a third operation unit 693. Third operation unit 693 is operated by the operator to start the process of rearranging shelf plate 510.

As shown in Fig. 28, display control unit 650 updates the position of shelf plate 510 in pallet stocker image portion 680 when rearrangement of shelf plate 510 is complete. In Fig. 27, display control unit 650 causes pallet stocker image portion 680 to display shelf plate 510 supported by support portion 560 (3-1).

As shown in Figs. 24 and 25, when accepting a command for rearranging shelf plate 510 from first support portion 560A to second support portion 560B among the plurality of support portions 560, robot control unit 620 controls robot 21 to move shelf plate 510 from first support portion 560A to second support portion 560B while gripping shelf plate 510 by master hand 210. In Fig. 24, by way of example, support portion 560 (3-3) corresponds to first support portion 560A, and support portion 560 (3-1) corresponds to second support portion 560B.

More specifically, as the operator operates third operation unit 693, operation acceptance unit 660 accepts the operator's operation and outputs a signal corresponding to this operation to program analysis unit 622. The signal output to program analysis unit 622 includes a signal for identifying the positions of shelf plate 510, which is to be rearranged, before and after moving.

Program storage unit 621 stores various operation programs 641 that command the operations of robot 21. Operation programs 641 include an operation program 641P for shelf plate rearrangement. Operation program 641P for shelf plate rearrangement commands an operation of robot 21 in rearrangement of shelf plate 510, and is created for each combination of the position of shelf plate 510 before moving and the position of shelf plate 510 after moving.

Program analysis unit 622 accepts the command for rearranging shelf plate 510 from the signal from operation acceptance unit 660, and reads the corresponding operation program 641P for shelf plate rearrangement from program storage unit 621. Program analysis unit 622 analyzes operation program 641P to extract a command for movement, and transmits the command to axis control unit 623. Program analysis unit 622 analyzes operation program 641P to extract a command for the movement of master hand 210, and transmits the command to hand control unit 624.

Axis control unit 623 controls the plurality of driving servomotors 23 in response to the command from program analysis unit 622. Hand control unit 624 controls master hand 210 in response to the command from program analysis unit 622.

Referring to Figs. 3 to 5, 24, and 25, robot control unit 620 rearranges shelf plate 510 when sensor 230 detects that there is no pallet 410 on this shelf plate 510.

More specifically, operation program 641P for shelf plate rearrangement includes a program that commands an operation of robot 21 for detecting whether or not there is pallet 410 on shelf plate 510 to be rearranged. Program analysis unit 622 transmits commands based on the operation program to axis control unit 623 and hand control unit 624.

In Fig. 24, a first position PA, a second position PB, and a third position PC are shown in the space on shelf plate 510, which is to be rearranged, supported by support portion 560 (3-3). As shown in Figs. 3 and 24, first position PA corresponds to the position at which pallet 410 is disposed when pallet 410 is placed on pallet support portion 520p at the left end of shelf plate 510. Second position PB corresponds to the position at which pallet 410 is disposed when pallet 410 is placed on pallet support portion 520q at the center of shelf plate 510. Third position PC corresponds to the position at which pallet 410 is disposed when pallet 410 is placed on pallet support portion 520r at the right end of shelf plate 510.

Axis control unit 623 controls the plurality of driving servomotors 23 such that sensor 230 is positioned to face first position PA in the Z-axis direction. Hand control unit 624 causes sensor 230 to perform sensing. When sensor 230 is formed of a photoelectric sensor, light is emitted from the light emitting portion of sensor 230 toward first position PA, and reflected light of the light is received by the light receiving portion of sensor 230. Sensor 230 outputs a signal corresponding to the amount of received light to program analysis unit 622. Program analysis unit 622 determines whether or not the amount of received light exceeds a predetermined threshold based on the signal from sensor 230. Program analysis unit 622 determines that there is pallet 410 on shelf plate 510 when the amount of received light exceeds the threshold, and determines that there is no pallet 410 on shelf plate 510 when the amount of received light is less than or equal to the threshold.

Axis control unit 623 controls the plurality of driving servomotors 23 such that sensor 230 is positioned to face second position PB in the Z-axis direction. Hand control unit 624 causes sensor 230 to perform the above-described sensing. Axis control unit 623 controls the plurality of driving servomotors 23 such that sensor 230 is positioned to face third position PC in the Z-axis direction. Hand control unit 624 causes sensor 230 to perform the above-described sensing.

When determining that there is no pallet 410 at any position of first position PA, second position PB, and third position PC by the above-described sensing, program analysis unit 622 continues the process of rearranging shelf plate 510. When determining that there is pallet 410 at at least one position of first position PA, second position PB, and third position PC by the above-described sensing, program analysis unit 622 stops the process of rearranging shelf plate 510. In this case, controller 610 may issue an alert for notifying the operator that there is pallet 410.

A flow of rearrangement of shelf plate 510 in pallet stocker 31 will be described. Referring to Figs. 25 to 28, when the operator operates start of the mode of rearranging shelf plate 510, controller 610 (display control unit 650) causes display unit 670 to display rearrangement screen 671 (S100).

Subsequently, controller 610 (robot control unit 620) accepts a command for rearranging shelf plate 510 (S101).

In this step, the operator specifies the floor (shelf plate 510) to be rearranged by operating first operation unit 681 on rearrangement screen 671, and specifies the position (support portion 560) of shelf plate 510, which is to be rearranged, after moving by operating second operation unit 682 on rearrangement screen 671. Program analysis unit 622 accepts a command for rearranging shelf plate 510 by receiving input of a signal from operation acceptance unit 660.

Subsequently, controller 610 (display control unit 650) causes display unit 670 to display the positions of shelf plate 510 before and after moving (S102).

In this step, display control unit 650 causes first position display unit 691 to display the position of shelf plate 510 before moving on the floor on which shelf plate 510 is to be rearranged, and causes second position display unit 692 to display the position of shelf plate 510 after moving.

Subsequently, controller 610 (robot control unit 620) starts the process of rearranging shelf plate 510 (S103).

In this step, the operator operates third operation unit 693 on rearrangement screen 671. Robot control unit 620 starts the process of rearranging shelf plate 510 in response to the operation of third operation unit 693 by the operator.

Subsequently, controller 610 (robot control unit 620) controls robot 21 and sensor 230 such that sensor 230 performs sensing (S104).

In this step, program analysis unit 622 controls robot 21 and sensor 230 such that sensor 230 is positioned in the Z-axis direction to face first position PA, second position PB, and third position PC in order and that sensing is performed by sensor 230 at each position of first position PA, second position PB, and third position PC.

Subsequently, controller 610 (robot control unit 620) determines whether or not there is pallet 410 on shelf plate 510 that is to be rearranged (S105).

When determining in step S105 that there is pallet 410 at at least one position of first position PA, second position PB, and third position PC on shelf plate 510, controller 610 issues an alert for notifying the operator that there is pallet 410 (S106).

In this step, display control unit 650 may cause display unit 670 to display a comment that there is pallet 410 on shelf plate 510 that is to be rearranged. The operator then causes robot 21 to perform the operation for evacuating pallet 410 from shelf plate 510, and then, starts step S101 again.

When determining in step S105 that there is no pallet 410 at any position of first position PA, second position PB, and third position PC on shelf plate 510, controller 610 (robot control unit 620) rearranges shelf plate 510 (S107).

In this step, master hand 210 moves toward pallet stocker 31 and is positioned in the Z-axis direction so as to face second grip portion 120B of shelf plate 510 to be rearranged.

Second grip portion 120B is inserted into grip insertion hole 221 as master hand 210 moves in the Z-axis direction. Master hand 210 grips second grip portion 120B. As master hand 210 moves upward, shelf plate 510 is lifted from first support portion 560A. Master hand 210 moves in the Z-axis direction such that shelf plate 510 is evacuated from the space on first support portion 560A.

Master hand 210 moves in the Y-axis direction. Master hand 210 moves in the Z-axis direction such that shelf plate 510 advances into the space above second support portion 560B. Shelf plate 510 is placed on second support portion 560B as master hand 210 moves downward. Master hand 210 releases second grip portion 120B. Second grip portion 120B exits from grip insertion hole 221 as master hand 210 moves in the Z-axis direction.

Subsequently, controller 610 (display control unit 650) updates the position of shelf plate 510 in pallet stocker image portion 680 (S108). The above steps complete the rearrangement of shelf plate 510.

The configuration of transport system 100 in the embodiment of the present invention described above is summarized as follows. Transport system 100 in the present embodiment includes: robot 21 having master hand 210, which is a hand; pallet stocker 31 for storing pallet 410 for holding workpiece W, pallet stocker 31 including shelf plate 510 that allows pallet 410 to be placed thereon, and the plurality of support portions 560 spaced apart from each other in an upward-downward direction, each support portion 560 being capable of supporting shelf plate 510; and robot control unit 620 that, when accepting a command for rearranging shelf plate 510 from first support portion 560A to second support portion 560B among the plurality of support portions 560, controls robot 21 to move shelf plate 510 from first support portion 560A to second support portion 560B while gripping shelf plate 510 with master hand 210.

With this configuration, robot 21 can be used to automate the rearrangement of shelf plate 510 in pallet stocker 31. This can increase applications of robot 21 to expand the scope of automation in transport system 100.

In particular, in the present embodiment, the operator cannot access pallet stocker 31 from outside of space 113, thus enabling the rearrangement of shelf plate 510 to be performed simply and safely by automation using robot 21.

Transport system 100 further includes: display unit 670; and display control unit 650 that causes display unit 670 to display an image of pallet stacker 31 and updates a position of shelf plate 510 in the image of pallet stacker 31 from first support portion 560A to second support portion 560B before and after the rearrangement of shelf plate 510.

With this configuration, the operator can check the position of shelf plate 510 before and after the rearrangement through display unit 670.

Transport system 100 further includes sensor 230 mounted in robot 21 and capable of detecting the presence or absence of an object. Robot control unit 620 rearranges shelf plate 510 when sensor 230 detects that there is no pallet 410 on shelf plate 510.

This configuration can prevent the rearrangement of shelf plate 510, on which pallet 410 remaining placed, by robot 21.

Pallet stocker 31 further includes fixed shelf plate 510, rearrangement of which is prohibited. With this configuration, the maximum height of the workpiece that can be placed on fixed shelf plate 515 can also be adjusted by rearranging shelf plate 510 disposed above and adjacent to fixed shelf plate 515.

The method of controlling transport system 100 in the present embodiment includes: the step (S101) of accepting a command for rearranging shelf plate 510 from first support portion 560A to second support portion 560B among the plurality of support portions 560; and the step (S107) of controlling, in response to the command, robot 21 to move shelf plate 510 from first support portion 560A to second support portion 560B while gripping shelf plate 510 by master hand 210.

The program in the present embodiment is a program executed by a computer for controlling transport system 100. The program causes the computer to perform the steps of: accepting a command for rearranging shelf plate 510 from first support portion 560A to second support portion 560B among the plurality of support portions 560 (S101); and controlling, in response to the command, robot 21 to move shelf plate 510 from first support portion 560A to second support portion 560B while gripping shelf plate 510 by master hand 210 (S107).

With this configuration, the rearrangement of shelf plate 510 in pallet stocker 31 can be automated using robot 21. This can increase the applications of robot 21 to expand the scope of automation in transport system 100.

A display controller (650) in the present embodiment controls, in a stocker (31) having a shelf plate (510) and a plurality of support units (560), screen display of a display unit (670) when the shelf plate (510) is rearranged using a robot (21), each support unit (560) being capable of supporting the shelf plate (510). The display controller (650) includes an image display unit

(810) that displays an image of the stocker (31) on the display unit (670), and an image update unit (820) that, when the shelf plate (510) is rearranged by the robot (21) from a first support portion (560A) to a second support portion (560B) among the plurality of support portions (560), updates a position of the shelf plate (510) in the image of the stocker (31) from the first support portion (560A) to the second support portion (560B) before and after the rearrangement.

Further, the image of the stocker (31) displayed on the display unit (670) includes the plurality of shelf plates (510) spaced apart from each other in the upward-downward direction.

Further, the image display unit further displays, on the display unit (670), an operation unit (681, 682) operated for selecting the first support portion (560A) and the second support portion (560B) from the plurality of support portions (560).

A transport system (100) in the present embodiment includes: a robot (21) having a hand (210); a pallet stocker (31) for storing a pallet (410) for holding a workpiece, the pallet stocker (31) including a shelf plate (510) that allows the pallet (410) to be placed thereon, and a plurality of support portions (560) spaced apart from each other in an upward-downward direction, each support portion (560) being capable of supporting the shelf plate (510); a robot control unit (620) that accepts a command for rearranging the shelf plate (510) from a first support portion (560A) to a second support portion (560B) among the plurality of support portions (560) and controls, in response to the command, the robot (21) to move the shelf plate (510) from the first support portion (560A) to the second support portion (560B) while gripping the shelf plate (510) with the hand (210); a display unit (670); and a display control unit (650) that causes the display unit (670) to display an image of the pallet stocker (31) and updates a position of the shelf plate (510) in the image of the pallet stacker (31) from the first support portion (560A) to the second support portion (560B) before and after the rearrangement of the shelf plate (510).

It should be understood that the embodiment disclosed herein has been presented for the purpose of illustration and non-restrictive in every respect. It is therefore intended that the scope of the present invention is defined by claims, rather than the description above, and encompasses all modifications and variations equivalent in meaning and scope to the claims.

This nonprovisional application is based on Japanese Patent Application No. 2024-105160 filed on June 28, 2024 with the Japan Patent Office, the entire contents of which are hereby incorporated by reference.

### REFERENCE SIGNS LIST

10, 10S, 10T machine tool; 12 machining area; 14 cover body; 16 opening; 18 operation panel; 21 robot; 22 robot base; 23 driving servomotor; 26 base; 27 first arm; 28 second arm; 29 hand attachment portion; 31, 31S, 31T pallet stocker; 51 transport operation panel; 56, 56h, 56i, 56j, 56k fence; 61, 61S, 61T setup station; 71 workpiece stocker; 81 hand stocker; 100 transport system; 101 swivel center axis; 102, 103, 105 pivot center axis; 104, 106 rotation center axis; 113 space; 120 grip portion; 120A first grip portion; 120B second grip portion; 120C third grip portion; 120D fourth grip portion; 121 groove portion; 126, 231 central axis; 210 master hand; 220 clamp mechanism; 221 grip insertion hole; 226 piston; 227 protrusion; 230 sensor; 310 workpiece hand; 320 gripping claw; 330 piston cylinder; 340 servomotor; 410 pallet; 510 shelf plate; 515 fixed shelf plate; 520, 520p, 520q, 520r pallet support portion; 525 tapered cone receiving portion; 531 horizontal frame; 532 vertical frame; 533 pin hole; 550 frame body; 551 pillar; 560 support portion; 560A first support portion; 560B second support portion; 561 plate; 610 controller; 620 robot control unit; 621 program storage unit; 622 program analysis unit; 623 axis control unit; 624 hand control unit; 625 parameter storage unit; 630 input/output device; 641, 641P operation program; 650 display control unit; 660 operation acceptance unit; 670 display unit; 671 rearrangement screen; 680 pallet stocker image portion; 681 first operation unit; 682 second operation unit; 691 first position display unit; 692 second position display unit; 693 third operation unit; 710 teaching hand; 720 touch probe; 720g contactor; 810 image display unit; 820 image update unit; PA first position; PB second position; PC third position; W workpiece.

## Claims

1. A display controller that controls, in a stocker including a shelf plate and a plurality of support portions, screen display of a display unit when the shelf plate is rearranged using a robot, each support portion supporting the shelf plate, the display controller comprising:
an image display unit that displays an image of the stocker on the display unit; and
an image update unit that, when the shelf plate is rearranged from a first support portion to a second support portion among the plurality of support portions by the robot, updates a position of the shelf plate in the image of the stocker from the first support portion to the second support portion before and after the rearrangement.

2. The display controller according to claim 1, wherein the image of the stocker displayed on the display unit includes a plurality of the shelf plates spaced apart from each other in an upward-downward direction.

3. The display controller according to claim 1 or 2, wherein the image display unit further displays, on the display unit, an operation unit operated to select the first support portion and the second support portion from the plurality of support portions.
